# EUROPÄISCHE PATENTANMELDUNG

(11) **EP 2 674 247 A2**
(43) Veröffentlichungstag der Anmeldung: **18.12.2013**
(21) Anmeldenummer: 13001731.2
(22) Anmeldetag: 04.04.2013
(51) Int. Cl.: B23Q 15/00, G05B 19/416

(54) **Vorrichtung und Verfahren zur Steuerung von Antrieben einer Werkzeugmaschine**

(30) Priorität: 11.06.2012 DE 102012011378
(71) Anmelder: ROBERT BOSCH GMBH, 70442 Stuttgart (DE)
(72) Erfinder: Landgraf, Guenther, 97753 Karlstadt-Karlburg (DE)
(74) Vertreter: Thürer, Andreas

(57) **Zusammenfassung**

Die Erfindung bezieht sich auf in Verfahren zum Steuern einer Maschine und eine Maschine, welche mindestens einen ersten Antrieb für ein erstes Element der Maschine und mindestens einen zum ersten Antrieb unterschiedlichen zweiten Antrieb für ein zweites Element der Maschine aufweist, wobei das erste Element auf eine vorgegebene Geschwindigkeit beschleunigt wird, während das zweite Element auf einen vorgegebenen Zielwert beschleunigt wird, welcher insbesondere eine vorgegebene Drehzahl oder eine definierte Vorschubposition ist, wobei die Beschleunigung des ersten Elementes und die Beschleunigung des zweiten Elementes aufeinander abgestimmt werden.

## Beschreibung

Die vorliegende Erfindung bezieht sich auf ein Verfahren zum Steuern einer Maschine und eine Maschine, welche mindestens einen ersten Antrieb für ein erstes Element der Maschine und mindestens einen zum ersten Antrieb unterschiedlichen zweiten Antrieb für ein zweites Element der Maschine aufweist.

Leistungsspitzen, d.h. eine überhöhte Energiestärke bei dem Betrieb von Antrieben der Elemente bzw. Aggregate verursachen sehr hohe Investitions- und Energiekosten, da beispielsweise das vorgelagerte Versorgungsnetz für die elektrischen Installationen, Apparate und Maschinen auf die maximal benötigte Leistung ausgelegt werden muss. Dies erfordert eine entsprechende Auslegung der Tranformatoren, Schaltapparate und Leitungsquerschnitte, die wiederum höhere Energiekosten verursachen.

Weiterhin steigen die Energiekosten, falls sich einzelne hohe Leistungsspitzen innerhalb eines Bereiches summieren, beispielsweise, wenn eine Vielzahl an Maschinen gleichzeitig jeweils Leistungsspitzen z.B. durch das Anschalten der Maschinen verursachen, da diese Leistungsspitzen durch Energie aus Regelkraftwerken abgedeckt werden muss, wobei der Energiepreis für diese Spitzenenergie im Vergleich zur üblich verwendeten Bandenergie relativ teuer ist.

Gegenwärtig benötigen die herkömmlichen Maschinen kurzzeitig sehr hohe Leistungsspitzen bzw. generieren auch kurzzeitig wiederum hohe Rückspeiseleistungen, wodurch die Maschinenbetreiber angehalten werden höhere Anschlussleistungen vorzuhalten, insbesondere wenn größere Maschinenparks vorhanden sind, wie dies beispielsweise in der Automobilindustrie gegeben ist.

Folglich sind eine Überwachung sowie eine entsprechende Regulierung von Leistungsspitzen notwendig.

Herkömmlicherweise versuchen die Maschinenhersteller bzw. auch die Maschinenbetreiber Leistungsspitzen der Maschinen und Anlagen dadurch zu vermeiden, indem die Antriebe der Elemente bzw. Aggregate und unter Umständen der Nebenaggregate zeitlich versetzt zu- bzw. abgeschalten werden. Dadurch entsteht ein zeitlich gestaffelter Betrieb der Antriebe der Maschinen, wodurch ein Überlagern der auftretenden Leistung vermieden und ein gleichmäßiger Leistungsbezug erzielt werden kann.

Dieses zeitlich gestaffelte Zu- und Abschalten der Antriebe wird über eine S PS gesteuert, die den Hochlauf, wie auch das Bremsen eines der Antriebe innerhalb der Maschine sowie unter Umständen auch der Nebenaggregate zeitlich verspätet zu einem anderen Antrieb der Maschine veranlasst, so dass beispielsweise eine Spindel erst auf ihre vorgegebene Drehbewegung bzw. Drehzahl beschleunigt wird, wenn die Vorschubachsen der Maschine ihre Sollposition bereits erreicht haben oder kurz nachdem die Vorschubachsen Ihr Bewegung in Richtung Ihrer Endposition begonnen haben.

Jedoch ist aufgrund des zeitlich gestaffelten Zu- und Abschaltens der Antriebe ein Abstimmen der einzelnen Antriebe aufeinander zwingend erforderlich, wobei dies zum aktuellen Zeitpunkt häufig nicht realisiert werden kann, so dass beispielsweise die Spindel und die Vorschubachsen gegenwärtig noch unabhängig voneinander in Ihre jeweiligen Zielwerte überführt werden. D.h., dass die Spindel bzw. Hauptspindel beispielsweise schon mit maximaler Beschleunigung auf die vorgegebene Drehzahl gebracht wird unabhängig davon, ob die Vorschubachsen für das Zurücklegen ihres Weges zwischen beispielsweise einem Werkzeugwechsler und einem Werkstückbearbeitungsbereich bzw. Werkstückanrückpunkt länger benötigen als geplant oder schneller die Distanz überwinden.

Diese Abstimmungsdifferenz gilt jedoch nicht nur beim Anfahren bzw. Anschalten der Antriebe, sondern auch beim Bremsen bzw. Abschalten der Antriebe, nach beispielsweise einem Bearbeitungsschritt, wenn die Vorschubachse zum Werkzeugwechsler zurückfahren muss, um ein neues Werkzeug aufzunehmen und die Spindel dementsprechend die Drehbewegung bzw. Drehzahl reduzieren kann.

Somit schöpfen die vorbekannten Lösungen, wie beispielsweise die Verzögerung des Hochlaufs der Spindel über die SPS, durch welche die maximal auftretende Leistung reduziert wird, die Einsparpotentiale nicht aus, wodurch weiterhin die maximal auftretende Leistung nicht exakt gesteuert werden kann.

Folglich liegt der vorliegenden Erfindung die Aufgabe zu Grunde Leistungsspitzen bei einem Betrieb von Maschinen zu vermeiden, um Energiekosten zu senken.

Diese Aufgabe löst die vorliegende Erfindung mittels eines Verfahrens zur Steuerung von Maschinen und mittels einer Maschine, welche mindestens einen ersten Antrieb für ein erstes Element der Maschine und mindestens einen zum ersten Antrieb unterschiedlichen zweiten Antrieb für ein zweites Element der Maschine aufweist, wobei das erste Element auf einen vorgegebenen Zielwert und bevorzugt eine vorgegebene Geschwindigkeit beschleunigt wird, während das zweite Element auf einen vorgegebenen Zielwert beschleunigt (bzw. bewegt) wird, wobei die Beschleunigung des ersten Elementes und die Beschleunigung (bzw. Bewegung) des zweiten Elementes (bzw. der diesen Elementen zugeordneten Antriebe) aufeinander abgestimmt werden. Bevorzugt unterscheiden sich der erste Zielwert und der zweite Zielwert voneinander. Insbesondere kann es sich dabei um unterschiedliche mechanische Größen und insbesondere unterschiedliche mechanische Bewegungsgrößen handeln.

Bei dem besagten Zielwert handelt es sich um einen Wert, welcher aus einer Gruppe, welche zumindest die Position, die Geschwindigkeit, das Drehmoment, die Beschleunigung und den Strom beinhaltet, ausgewählt wird. Folglich handelt es sich bei dem Zielwert beispielsweise um die Vorgabe zum Erzielen einer bestimmte Geschwindigkeit, einer bestimmten Drehzahl, einer bestimmte Beschleunigung, eines bestimmten Drehmomentes, einer bestimmten Position oder insbesondere von Bewegungsabläufen oder auch Kombinationen hieraus oder dergleichen.

Die beiden Antriebe sind bevorzugt unabhängig voneinander steuerbar, wobei jedoch bevorzugt die Bewegungen der Antriebe wenigstens zeitweise auch miteinander korrelieren. Bei der aufgeführten erfindungsgemäßen Maschine handelt es sich dabei bevorzugt um eine Werkzeugmaschine oder eine Verpackungs- oder Druckmaschine, die neben einem Antrieb für beispielsweise eine Spindel, welche eine rotatorische Bewegung ausführt mindestens noch einen weiteren Antrieb für bevorzugt eine Vorschubachse, welche eine translatorische Bewegung ausführt, aufweist. Die genannte Maschine kann jedoch ebenfalls lediglich zwei oder mehrere Antriebe aufweisen, die lediglich eine rotatorische oder lediglich eine translatorische Bewegung ausführen, wobei diese Antriebe und die von den Antrieben ausgeführten Bewegungen zumindest zeitweise miteinander abgestimmt werden müssen.

Unter einer Spindel ist hierbei ein Maschinenelement, wie beispielsweise eine Werkzeugspindel zu verstehen, welche eine rotatorische Drehbewegung um eine zentrisch gelegene Spindelachse ausführt und damit ein auf der Spindel angeordnetes Werkstück oder Werkzeug ebenfalls in Rotation versetzt. Angewandt werden diese Spindeln beispielsweise in Drehmaschinen bei der spanenden Bearbeitung.

Unter Vorschubachsen werden hierbei insbesondere programmierbare Achse verstanden, die eine Bahn in einem definierten Raum bestimmen. Eine Vorschubachse findet sich beispielsweise in Drehmaschinen, wobei an diesem Element meist ein Werkzeug angeordnet ist, welches das sich um die eigene Achse drehende Werkstück zumindest zeitweise bearbeiten.

Ferner kann das erfindungsgemäße Verfahren bzw. die erfindungsgemäße Maschine in allen Bereichen eingesetzt werden, in denen geregelte Antriebe für Elemente sowie entsprechende zum Betrieb der Maschine notwendige Nebenaggregate energieeffizient betrieben werden sollen, um eine maximal zulässige Leistungsgrenze nicht zu überschreiten. Daneben wäre die Erfindung aber auch etwa in Druckmaschinen oder anderen Automatisierungseinrichtungen einsetzbar.

Die Maschine weist weiterhin vorteilhaft mindestens eine Steuereinrichtung zum Steuern der in der Maschine angeordneten Antriebe auf, wobei entweder eine Drehzahl bzw. eine Drehbewegung des ersten Antriebes des ersten Elementes zumindest zeitweise beschleunigt wird oder eine Bewegung des zweiten Antriebes des zweiten Elementes zumindest zeitweise beschleunigt wird, damit das erste Element seine vorgegebene Drehzahl im Wesentlichen zur gleichen Zeit erreicht, zu der das zweite Element seinen vorgegebenen Zielwert erreicht. Die Steuerung der Antriebe erfolgt dabei vorzugsweise über eine NC-Steuerung, eine Motion-Steuerung, eine SPS-Steuerung und/oder eine RC-Steuerung.

Das erste Element ist hierbei bevorzugt eine Spindel, die eine vorgegebene (eventuell auch maximale) Drehzahl vor Beginn der Werkstückbearbeitung erreichen muss, während das zweite Element bevorzugt ein Vorschubachse ist, welche zu der Zeit zu der die Spindel ihre vorgegebene Drehzahl erreicht hat eine vorgegebene Bearbeitungsposition eingenommen haben muss. Bei dieser vorgegebenen Drehzahl handelt es sich damit vorteilhaft um eine Solldrehzahl, welche für einen bestimmten Arbeitsgang oder Betriebszustand der Maschine vorgegeben wird. Bei einer Vorschubachse handelt es sich beispielsweise um eine in der Lageregelung betriebene Linear- oder Rundachse.

Dementsprechend ist es vorteilhaft die mindestens zwei Antriebe der erfindungsgemäßen Maschine, derart miteinander abzustimmen, dass die Beschleunigung der Drehzahl bzw. der Drehbewegung der Spindel sich der Vorschubbewegung der Vorschubachse bzw. die Beschleunigung der Vorschubbewegung der Vorschubachse sich der Drehzahl der Spindel anpasst, so dass alle Antriebe zu gleichen Zeit, d.h. ohne Zeitverzögerung einen ihnen vorgegebenen definierten Zielwert erreichen. Damit wird bewusst die Beschleunigung eines Antriebes verringert.

Es wäre jedoch auch möglich, die Bewegungsabläufe bzw. Beschleunigungen mehrerer Spindeln (oder auch mehrerer Vorschubachsen) aufeinander anzupassen. So könnte eine Reduzierung der Beschleunigungen aller Antriebe mit Ausnahme des Langsamsten erfolgen.

Die erfindungsgemäße Steuerungseinrichtung, welche im Folgenden auch als Leistungs-/Energieverbrauchssteuereinrichtung bezeichnet wird, führt vor den Beschleunigungen der Antriebe zumindest eine Zeitbedarfsberechnung oder -messung dieser Antriebe durch, d.h. es wird berechnet oder gemessen wie lange die einzelnen Antriebe benötigen, um die entsprechenden Elemente auf einen vorgegebenen Zielwert zu beschleunigen. Demnach wird beispielsweise der Zeitbedarf bis zum Erreichen der vorgegebenen Drehzahl des ersten Elementes, d.h. der Zeitbedarf des Spindelhochlaufes sowie der Zeitbedarf bis zum Erreichen des vorgegebenen Zielwertes des zweiten Elementes, d.h. der Zeitbedarf der Vorschubachsen-Positionierbewegung berechnet. Diese mindestens zwei berechneten Zeitbedarfe werden danach, beispielsweise von der Leistungs-/Energieverbrauchssteuereinrichtung zueinander abgeglichen, um den höheren bzw. den größten Zeitbedarf zu ermitteln, welcher die vorgegebene bzw. notwendige Zeit bestimmt.

Nach diesem Zeitabgleich ergeben sich zwei unterschiedliche weitere Vorgehensvarianten, die im Folgenden genauer erläutert werden. Sofern der erste Antrieb, d.h. beispielsweise der Antrieb der Spindel einen höheren Zeitbedarf als der zweite Antrieb aufweist, um die vorbestimmte Drehzahl zu erreichen, wird die Beschleunigung des zweiten Antriebes, also beispielsweise des Antriebes der Vorschubachse derart auf die Beschleunigung des ersten Antriebes angepasst, dass die Vorschubachse oder die Vorschubachsen mit einer niedrigeren bzw. langsameren Geschwindigkeit auf die vorgegebene Bearbeitungsposition bewegt werden. Dementsprechend werden die Vorschubachsen entweder langsamer positiv beschleunigt oder auch negativ beschleunigt, was einem Bremsen bzw. Verzögern der Bewegung der Vorschubachsen in Richtung der vorgegebenen Position entspricht.

Eine Beschleunigung kann also einen positiven oder einen negativen Wert (Verzögerung) aufweisen. In allen Fällen ist zu berücksichtigen, dass die maximal zulässige Beschleunigung sowie die maximal zulässige Geschwindigkeit bzw. Drehzahl oder das maximale Moment oder der maximale Strom etc. nicht überschritten wird.

Das Ergebnis dieser angepassten Beschleunigung der Bewegung der Vorschubachse an die Beschleunigung der Spindel ist ein Vermeiden von Leistungsspitzen, da der Energieverbrauch für das Positionieren der Vorschubachse proportional zum Geschwindigkeitsquadrat ist und mit der Formel Eₖᵢₙ=0,5*m*v² beschrieben werden kann. D.h., werden die Vorschubachsen mit einer geringeren Beschleunigung bzw. Geschwindigkeit in Richtung des Zielwertes bewegt, so verbraucht der Antrieb der Vorschubachsen dementsprechend weniger Energie. Weiterhin werden auch Taktzeitverluste vermieden, da beide Elemente aufgrund der miteinander abgestimmten Antriebe ihren vorgegebenen Zielwert, welcher der vorgegebenen Drehzahl oder auch der definierten Bearbeitungsposition entspricht zur gleichen Zeit erreichen. Damit ist es insgesamt möglich, dass eine Energieeinsparung durch Geschwindigkeits-, Drehmoment- oder Stromabsenkung erreicht werden. Ähnliches gilt, sofern die Zeitbedarfsermittlung der Leistungs-/Energieverbrauchssteuereinrichtung berechnet, dass die Vorschubachse für ihre Bewegung zu ihrem definierten Zielwert, d.h. für ihren zurückgelegten Weg, der unter Umständen auch eine Mehrzahl von hintereinander auszuführenden translatorischen oder rotatorischen Bewegungen in die verschiedenen Ebenen bzw. Richtungen entsprechend des kartesischen Koordinatensystems umfassen kann, einen höheren Zeitbedarf benötigt. In diesem Fall wird die Beschleunigung der Spindeldrehbewegung der Beschleunigung der Vorschubbewegung der Vorschubachse angepasst, so dass der Antrieb der Spindel bzw. die Spindel entweder mit einer niedrigeren positiven Beschleunigung auf die vorgegebene Drehzahl beschleunigt wird oder mit einer geringeren negativen Beschleunigung gebremst wird, um nicht vor dem Erreichen der Vorschubachsen an deren Zielwert ihre vorgegebene und eventuell auch maximale Drehzahl zu erlangen. In diesen Fällen ist ebenfalls zu berücksichtigen, dass die maximal zulässige Beschleunigung sowie die maximal zulässige Geschwindigkeit bzw. Drehzahl oder Moment, Strom etc. nicht überschritten wird.

Auch bei der Abstimmung der Beschleunigung der Spindel auf die Beschleunigung bzw. Geschwindigkeit_der Vorschubachse können Leistungsspitzen und Taktzeitverluste, wie oben beschrieben, vermieden werden. Die Leistungs-/Energieverbrauchssteuereinrichtung kann bei Bedarf auch Leistungsspitzen über eine Maschine oder mehrere Maschinen (mit Antrieben und Nebenaggregaten) begrenzen sowie in gleicher Weise eine Minimierung der Maschinenleistung zu jedem Zeitpunkt über eine Maschine oder mehrere Maschinen hinweg sicherstellen.

Auch die Änderungen des Spindel- und/oder Vorschub-Overrides, d.h. das Verändern der den Antrieben zur Verfügung stehenden Energiemenge durch ein Verstellen beispielsweise eines externen Energiezufuhrschalters wirken sich während der Beschleunigungen der Antriebe auf die einzelnen Bewegungen der Antriebe aus und sollten folglich vermieden werden, da eine energieeffiziente Steuerung der Antriebe bereits durch die Leistungs-/Energieverbrauchssteuereinrichtung selbst gesteuert und geregelt wird.

Weiterhin ruft die Leistungs-/Energieverbrauchssteuereinrichtung vorteilhaft zumindest zeitweise eine von den Antrieben der Elemente verwendete Leistung entweder über das Leistungsmessgerät, welches in oder an der Maschine angeordnet ist oder indirekt insbesondere über Modelle unter Verwendung einer Mehrzahl von Steuer- und/oder Statussignalen (bei einem Hydraulikaggregat, beispielsweise: Hydraulikaggregat ein, Klemmung zu, Klemmung auf, Hydraulikaggregat läuft, ...), welche den aktuell vorliegenden Status der einzelnen Elemente bzw. der einzelnen Antriebe der Elemente der Maschine angeben, von einzelnen in oder an der Maschine angeordneten Nebenaggregaten ab, um zu kontrollieren, ob die Antriebe einen Energiebedarf aufweisen, welcher sich noch unterhalb der maximal zulässigen Leistungsgrenze befindet bzw. zu ermitteln ob der Energiebedarf der Antriebe der Maschine steigt oder sich kontinuierlich innerhalb eines eventuell definierten Bereiches befindet.

Unter dem aktuellen Status der Antriebe ist beispielsweise zu verstehen, ob sich der Antrieb in einem angeschalteten oder ausgeschalteten Zustand befindet oder beispielsweise welche Drehzahl bzw. Drehmoment aktuell an dem jeweiligen Antrieb eingestellt ist.

Dabei kann die Maschine eine Vielzahl von Sensoreinrichtungen aufweisen, welche die Drehzahl, die Position, das Drehmoment, und/oder die elektrisch zugeführte oder mechanisch abgeführte Leistung / Energie der Antriebe messen, wobei die Antriebe vorteilhaft Servomotoren aufweisen, die beispielsweise mit einem Servoregler einen sogenannten Servoantrieb bilden. Die Ansteuerung der Motoren kann dabei auf Basis von Messungen dieser Sensoreinrichtungen erfolgen.

Nach der Messung und Auswertung der von den Antrieben der Maschine verwendeten Leistung bzw. Energie, kann diese derart geregelt werden, indem die Antriebe entsprechend energieeffizient gesteuert werden.

Zudem erkennt die Leistungs-/Energieverbrauchssteuereinrichtung die zur Steuerung der Maschine zumindest zeitweise erforderlichen Nebenaggregate und steuert diese je nach Bedarf an, wobei auch die Nebenaggregate bzw. Nebenelemente, wie beispielsweise ein Hydraulik-Aggregat oder ein Kühl-Aggregat während ihres Anschaltens, ihres Betriebes und ihres Abschaltens Energie verbrauchen, die zum Gesamtenergieverbrauch der Maschine zugerechnet werden kann.

Demzufolge ist es vorteilhaft, dass die Leistungs-/Energieverbrauchssteuereinrichtung im Wesentlichen alle Informationen bezüglich einer maximal zulässigen Gesamtleistung der Maschine erkennt, abspeichert und überwacht, wobei der Energieverbrauch aller Aggregate und aller verwendeter Nebenaggregate der Maschine summiert wird und mit einer vorgegebenen maximal zulässigen Gesamtleistung der Maschine abgeglichen wird, um ein Überschreiten der maximal zulässigen Gesamtleistung und dementsprechende Leistungsspitzen und erhöhte Energiekosten zu vermeiden.

Folglich ist es für die Leistungs-/Energieverbrauchssteuereinrichtung möglich beispielsweise die Beschleunigung der Bewegung des ersten Elementes, beispielsweise einer Spindel, und/oder die Beschleunigung der Bewegung des zweiten Elementes, beispielsweise einer Vorschubachse, zumindest zeitweise zu ändern, insbesondere zu reduzieren, wenn die zulässige Gesamtleistung der Maschine überschritten wird.

Ebenso ist es möglich, dass die Leistungs-/Energieverbrauchssteuereinrichtung zusätzlich zu oder neben der Änderung der Beschleunigungen der Antriebe bzw. anstatt der Änderung der Beschleunigungen der Antriebe, wie oben beschrieben, einzelne oder auch alle für die Nutzung der Maschine und der Antrieben verwendete Nebenaggregate zumindest zeitweise abschaltet. Dafür besitzt die Leistungs-/Energieverbrauchssteuereinrichtung der erfindungsgemäßen Maschine beispielsweise eine sogenannte Abschaltpriorität, welche der Leistungs-/Energieverbrauchssteuereinrichtung die Möglichkeit gibt auch während der Inbetriebnahme der Maschine die einzelnen Antriebe der Elemente und Nebenaggregate einzeln auszuschalten oder leicht verzögert zu zuschalten. Die Auswahl der abzuschaltenden Nebenaggregate trifft die Leistungs-/Energieverbrauchssteuereinrichtung beispielsweise über definierte Maschinenparameter, welche der Steuereinrichtung detailliert angeben bzw. vorgeben, welche Nebenaggregate während bestimmter Bearbeitungsschritte zwingend benötigt werden, bzw. welche Mindestvoraussetzungen, wie etwa ein Mindesthydraulikdruck erfüllt sein müssen und welche nicht notwendig sind und zwischenzeitlich so lange (zumindest kurzzeitig) abgeschalten werden können, bis deren Verwendung wieder benötigt wird. Somit kann die Leistungs-/Energieverbrauchssteuereinrichtung vorteilhaft bei einem Überschreiten der maximal zulässigen Gesamtleistung der Maschine aufgrund ihr zur Verfügung stehender umfangreicher Parameter sowie der vorliegenden Steuer- und Statussignale einzelne Nebenaggregate je nach Bedarf und Notwendigkeit zu- und abschalten.

Die Leistungs-/Energieverbrauchssteuereinrichtung könnte bei Bedarf auch Leistungsspitzen über mehrere Maschinen (mit Antrieben und Nebenaggregaten) begrenzen. Entsprechend könnte auch der Energieverbrauch über mehrere Maschinen hinweg minimiert werden.

Weiterhin wird eine Maschine, insbesondere zum Bearbeiten von Werkstücken beansprucht, welche mindestens einen ersten Antrieb für ein erstes Element der Maschine und mindestens einen zum ersten Antrieb unterschiedlichen zweiten Antrieb für ein zweites Element der Maschine aufweist, wobei die Maschine eine Leistungs-/Energieverbrauchssteuereinrichtung aufweist, welche die Antriebe der Elemente der Maschine derart steuert, dass der erste Antrieb das erste Element auf eine vorgegebene Geschwindigkeit beschleunigt und der zweite Antrieb das zweite Element auf einen vorgegebene Zielwert beschleunigt bzw. führt, wobei die Beschleunigung des ersten Elementes und die Beschleunigung des zweiten Elementes aufeinander abgestimmt sind.

In einem bevorzugten Ausführungsbeispiel ist das erste Element der erfindungsgemäßen Maschine eine Spindel und das zweite Element eine Vorschubachse.

Schließlich kann eine Steuereinrichtung vorgesehen sein, die ein Softwareprogramm aufweist, welches einen Algorithmus zur Zeitbedarfsmessung der Antriebe der Maschine aufweist, wobei zuerst der Zeitbedarf des Spindelhochlaufs berechnet wird und danach der Zeitbedarf der Vorschubachsen-Positionierbewegung, um daraus den größten Zeitbedarf mittels eines Vergleiches der beiden ermittelten Zeitbedarfe untereinander zu bestimmen. Der größte Zeitbedarf bestimmt somit die vorgegebene Zeit, die benötigt wird, um einen vorbestimmten Zielwert zu erreichen und danach können alle Antriebe der erfindungsgemäßen Maschine ausgerichtet werden. Folglich werden die schnelleren Antriebe, d.h. die Spindeln und/oder Achsen mit dem geringeren Zeitbedarf bis zum Ereichen des vorbestimmten Zielwertes entsprechend verlangsamt, wobei dementsprechend beispielsweise vorteilhaft die Vorschubachsen mit einer langsameren Geschwindigkeit verfahren werden, während die Spindeln vorteilhaft langsamer beschleunigt oder gar gebremst werden.

Bei dem oben erwähnten Zielwert kann es sich beispielsweise um eine Sollposition, eine Sollbeschleunigung, eine Solldrehzahl, eine Sollgeschwindigkeit, ein Solldrehmoment oder einen Sollstrom handeln.

Durch eine Veränderung des Spindel- und/oder Vorschub-Overrides werden auch die Bewegungen der Vorschubachsen und/oder Spindeln während ihrer Bewegung verändert. Dementsprechend werden nach einer Änderung des Overrides auch vorteilhaft die Antriebe der erfindungsgemäßen Maschine wieder neu aneinander angepasst. Hierfür dient ggfs. eine neue Zeitbedarfsmessung.

Weitere Vorteile, Ziele und Eigenschaften der vorliegenden Erfindung werden anhand nachfolgender Beschreibung anliegender Zeichnung erläutert, in welcher beispielhaft eine erfindungsgemäße Maschine sowie Diagramme zur Veranschaulichung des erfindungsgemäßen Verfahrens dargestellt sind.

In den Figuren zeigen:
- Fig. 1: eine Prinzipskizze eines Ausführungsbeispieles einer erfindungsgemäßen Maschine,
- Fig. 2: Diagramme über die Beschleunigungen des ersten Antriebes des ersten Elementes und des zweiten Antriebes des zweiten Elementes der erfindungsgemäßen Maschine, wenn der erste Antrieb einen höheren Zeitbedarf aufweist,
- Fig. 3: Diagramme zur Anpassung der Beschleunigung des zweiten Antriebes des zweiten Elementes auf die Beschleunigung des ersten Antriebes des ersten Elementes der erfindungsgemäßen Maschine,
- Fig. 4: Diagramme über die Beschleunigungen des ersten Antriebes des ersten Elementes und des zweiten Antriebes des zweiten Elementes der erfindungsgemäßen Maschine, wenn der zweite Antrieb einen höheren Zeitbedarf aufweist,
- Fig. 5: Diagramme zur Anpassung der Beschleunigung des ersten Antriebes des ersten Elementes auf die Beschleunigung des zweiten Antriebes des zweiten Elementes der erfindungsgemäßen Maschine.

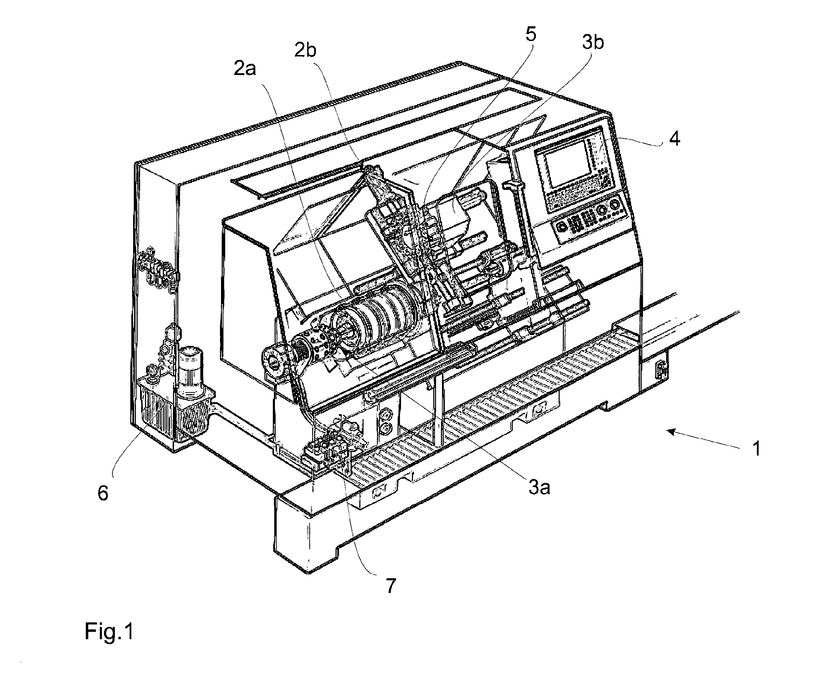

Fig. 1 zeigt eine Prinzipskizze eines Ausführungsbeispieles einer erfindungsgemäßen Maschine, die eine Steuereinrichtung 4 zum Steuern der Antriebe 2a, 2b der Elemente 3a, 3b, eine Einrichtung zur Bereitstellung von Energie (hier nicht dargestellt, da auf der ,Rückseite der Maschine angeordnet) für die Antriebe 2a, 2b der Elemente 3a, 3b sowie eine Werkzeugwechselvorrichtung 5 aufweist. Weiterhin weist die Maschine 1 mindestens ein Nebenaggregat 6 bzw. 7 auf, welches beispielsweise ein Hydraulik-Aggregat ist.

Bei einem bevorzugten Ausführungsbeispiel der erfindungsgemäßen Maschine 1 ist eine Spindel als erstes Element 3a und mindestens eine Vorschubachse als zweites Element 3b vorgesehen.

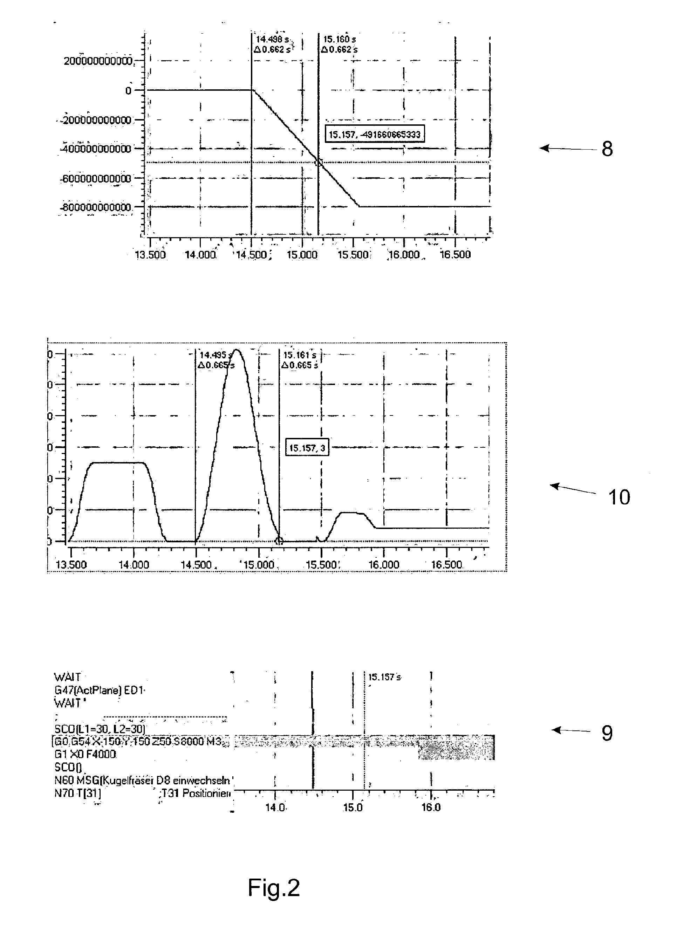

In der Fig. 2 sind in den Diagramme 8, 9 und 10 die Beschleunigungen, Geschwindigkeiten bzw. Bewegungen des ersten Antriebes 2a des ersten Elementes 3a und des zweiten Antriebes 2b des zweiten Elementes 3b der erfindungsgemäßen Maschine 1 (siehe Fig.1) dargestellt, unter dem Aspekt, dass der erste Antrieb 2a einen höheren Zeitbedarf aufweist, als der zweite Antrieb 2b. Dieser Zeitbedarf wird mittels des Zeitmessgerätes ermittelt. Das Diagramm 8 zeigt hierbei die Spindeldrehzahl der Spindel und das Diagramm 9 die Bahngeschwindigkeit der Vorschubachse, wobei deutlich wird, dass die Vorschubachse bereits zur Hälfte der Zeit des NC-Satzes ihre vorgegebene Position erreicht hat. Dies bedeutet, dass die Vorschubachse bereits Ihren Zielwert erreicht hat, während sich die Spindel noch in Ihrer Beschleunigungsphase befindet, um eine vorgegebenes Drehzahl zu erreichen. Dieser Sachverhalt wird im Diagramm 10 deutlich.

Dementsprechend könnten die Vorschubachsen mit einer geringeren Beschleunigung bzw. einer geringeren Geschwindigkeit ohne Taktzeitverlust bewegt werden, wobei die Leistungs-/Energieverbrauchssteuereinrichtung folglich die Beschleunigung der Vorschubachsen der Beschleunigung der Spindel anpasst.

Folglich werden die Vorschubachsen ohne Taktzeitverlust bewegt, wobei auch ein Rückspeisen mit Verlusten, welches aufgrund eines Abbremsvorganges der Vorschubbewegung mit darauffolgendem erneuten Beschleunigen auf die erforderliche Geschwindigkeit vermieden wird.

Da aufgrund des Bestrebens einer geringen Taktzeit die Spindeln üblicherweise mit höchster möglicher Beschleunigung angetrieben werden, wäre somit eine zusätzliche Beschleunigung der Spindeln nicht möglich, um gleichzeitig mit der Vorschubachse ihren vorgegebenen Zielwert zu erreichen.

Jedoch ist es auch denkbar, dass nach einer Zeitbedarfsmessung der eine Antrieb, der einen höheren Zeitbedarf aufweist auf den anderen folglich schnelleren Antrieb angepasst wird, solange eine positive Beschleunigung des einen Antriebes realisiert werden kann, ohne Leistungsspitzen zu verursachen.

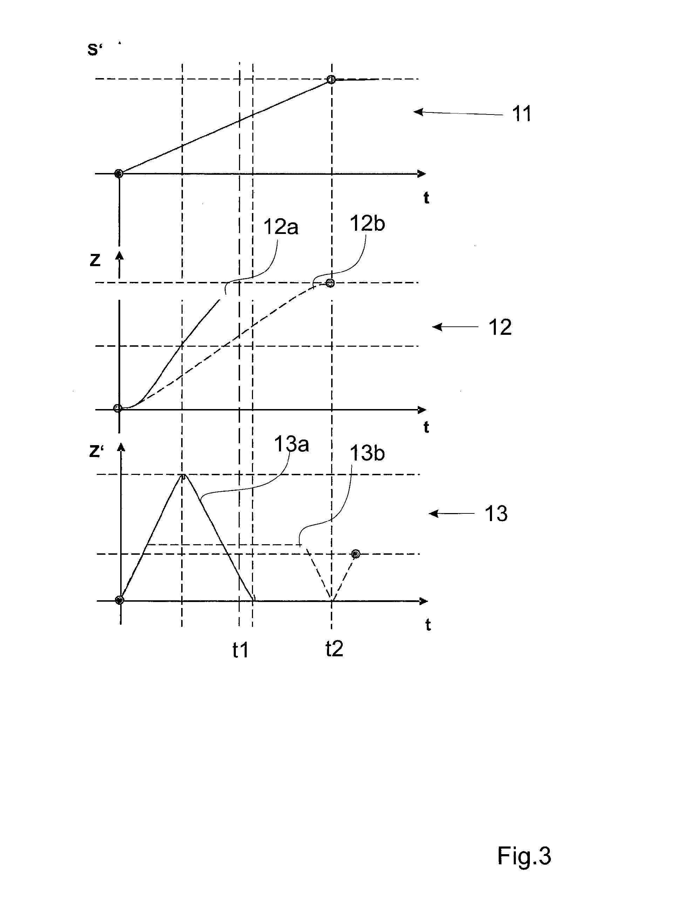

In Fig. 3 ist die Anpassung der Bahngeschwindigkeit in Diagramm 12 dargestellt, wobei diese Anpassung gemäß des Zeitbedarfes der Spindel erfolgt. Wie Diagramm 11 zeigt benötigt die Spindel eine Zeit t2 bis diese ihren vorgegebenen Zielwert, d.h. eine zur Bearbeitung notwendige und vorgegebene ggfs. maximale Drehzahl erreicht hat. Auf diesen Zeitbedarf hin steuert die Leistungs-/Energieverbrauchssteuereinrichtung den Antrieb der Vorschubachse, wobei der Antrieb, wie in Fig. 2 beschrieben beispielsweise negativ beschleunigt, d.h. gebremst wird, um nicht wie vor der Abstimmung der Antriebe zueinander den Zielwert, d.h. die vorgegebene Position bereits bei einer Zeit t1 zu erreichen (siehe Kurve 12a), sondern erst, ebenso wie die Spindel bei einer Zeit t2 (siehe Kurve 12b). Folglich erreichen beide Elemente ihren vorgegebenen Zielwert zur gleichen Zeit.

Das Diagramm 13 der Fig. 3 zeigt demnach den Beschleunigungsverlauf der Vorschubachse während einer ersten noch nicht an die Spindelbeschleunigung angepassten Bewegung (Kurve 13a) sowie während einer bereits an die Spindelbeschleunigung angepassten Beschleunigung (Kurve 13b), woraus deutlich zu erkennen ist, dass bei Kurve 13a die Beschleunigung der Vorschubachse bereits einen maximalen Wert erreicht hat, obwohl dies nicht erforderlich ist, da die Spindel gemäß Diagramm 11 sich noch in einer Beschleunigungsphase befindet, daraufhin die Vorschubachse wieder gebremst werden muss, und folglich bereits bei einer Zeit t1 den vorbestimmten Zielwert erreicht hat, um danach das Erreichen des Zielwertes der Spindel (bzw. der Vorschubachse) abwarten zu müssen. Demnach offenbart das Diagramm 13 einen erhöhten Energieaufwand, mit eventuellen Leistungsspitzen während des Verlaufes von 13a, aufgrund einer enormen positiven Beschleunigung und einer darauffolgenden negativen Beschleunigung, d.h. Verzögerung, obgleich die Vorschubachsen dennoch weitaus vor der Spindel ihren Zielwert erreicht haben.

Einen entsprechend anderen Verlauf zeigt die Kurve 13b, welche die Beschleunigung der Vorschubachsen nach der Abstimmung der Antriebe zueinander darstellt. Gemäß 13b wird die Vorschubachse auf eine im Wesentlichen mittlere Beschleunigung gebracht und verläuft über einen definierten Zeitraum mit einer zur Kurve 13a relativ gleichbleibenden Beschleunigung bis zu einem definierten Zeitpunkt, ab dem die Beschleunigung verzögert wird, was einem Auslaufen der Beschleunigung entsprechen kann.

Demnach erfährt die Vorschubachse bevorzugt eine geringe positive und dementsprechend auch eine geringe negative Beschleunigung bis zum Erreichen ihres Zielwertes, welcher von der Vorschubachse in bevorzugter Weise zeitgleich mit dem Erreichen des Zielwertes der Spindel erfolgt. Dadurch wird ein hoher Energieaufwand und eventuelle Leistungsspitzen vermieden ohne Verluste der Taktzeit, die von dem Antrieb bzw. dem Element vorgegeben wird, welches den größten Zeitbedarf bei der Zeitbedarfsermittlung aufweist.

Es wäre auch möglich, dass mehrere erste Antriebe bzw. Spindelantriebe auf die Bewegung der Vorschubachse angepasst werden.

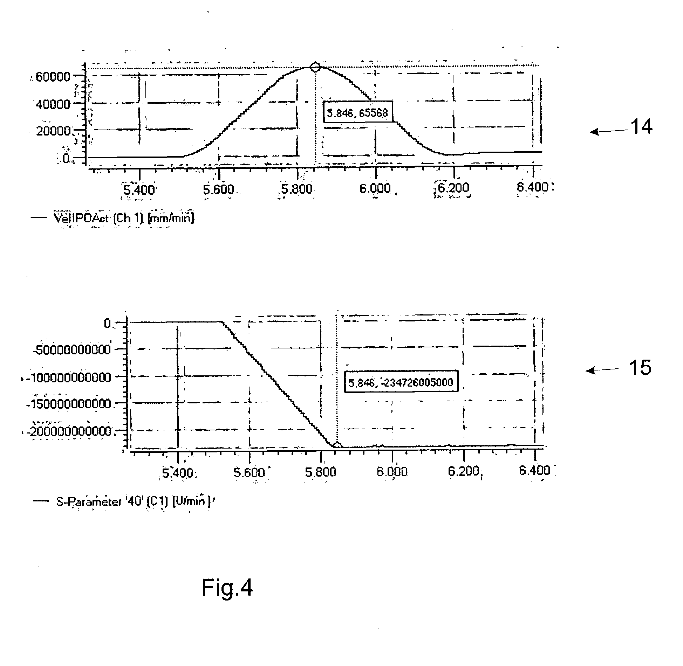

Die Fig. 4 zeigt im Diagramm 14 die Bahngeschwindigkeit der Vorschubachse und im Diagramm 15 die Spindeldrehzahl der Spindel, wobei deutlich wird, dass die Vorschubachsen erst die Hälfte der Bewegung absolviert haben, während zur gleichen Zeit die Spindel bereits ihre vorgegebene Drehzahl erreicht hat.

Demzufolge ist eine Anpassung der Antriebe zueinander erforderlich, wobei die Leistungs-/Energieverbrauchssteuereinrichtung die Beschleunigung der Spindel reduziert, damit beide Elemente zur gleichen Zeit ihren vorgegebenen Zielwert erreichen.

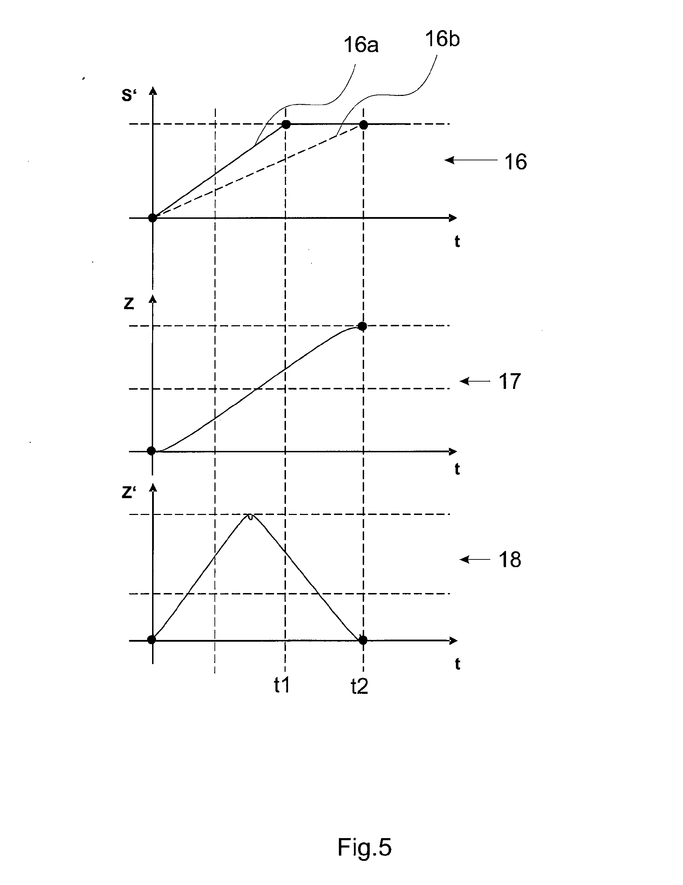

Dieses Vorgehen wird noch einmal in Fig. 5 verdeutlicht, in der das Diagramm 16 veranschaulicht das die Spindel zum Zeitpunkt t1 bereits ihren Zielwert, d.h. ihre vorgegebene Drehzahl erreicht hat (siehe Gerade16a), während gemäß Diagramm 17 zum gleichen Zeitpunkt t1 die Vorschubachse erst nahezu die Hälfte ihrer zu absolvierenden Bewegung ausgeführt hat. Nach einer Anpassung der Antriebe bzw. der Beschleunigung der Antriebe aneinander und in diesem Fall bevorzugt einer Anpassung der Beschleunigung des Antriebes der Spindel zu der Beschleunigung des Antriebes der Vorschubachse erreicht die Spindel erst ihre vorgegebene Drehzahl, wenn die Vorschubachse ihren Zielwert, d.h. ihre vorgegebene Position erreicht und damit ihre vollständig zu absolvierende Bewegung ausgeführt hat. Demzufolge erreicht die Spindel zum Zeitpunkt t2 ihren Zielwert, wie die Gerade 16b darstellt, ebenso wie die Vorschubachse zum Zeitpunkt t2 ihren Zielwert erreicht.

Das Diagramm 18 der Fig. 5 zeigt hierbei den Beschleunigungsverlauf der Vorschubachse, welche bis auf einen bestimmten Wert positiv beschleunigt wird, um danach negativ beschleunigt zu werden. D.h. nach einer Beschleunigung der Bewegung der Vorschubachse wird diese Bewegung wieder verzögert, damit die Vorschubachse zu Zeit t2 einen vorgegebenen Zielwert erreicht.

Eine Zeitbedarfsmessung mit einem entsprechenden Zeitabgleich kann von der Zeitmesseinrichtung jeweils vor dem Ansteuern der Antriebe durchgeführt werden, so dass vor jedem NC-Satz eine erneute Zeitbedarfsmessung stattfindet, um die entsprechend zu verwendenden Antriebe der benötigten Elemente jeweils neu, je nach erforderlicher Bewegung aufeinander abzustimmen.

Die Vorteile des erfindungsgemäßen Verfahrens bzw. der erfindungsgemäßen Maschine zeigen sich in einer sicheren Reduktion der Anschlussleistungen, da ein überhöhter Energiebedarf bzw. Leistungsspitzen vermieden wird, wobei vorzugsweise auch der Bedarf der Nebenaggregate berücksichtigt werden kann. Dies spart neben der zum Betrieb der Maschine benötigten Energie auch die Kosten eines teuren vorgebauten Stromversorgungsnetzes, welches erhöhte Energiebedarfe abdecken kann.

Zusätzlich werden Energieeinsparungen durch die abgestimmten Bewegungen zwischen den Vorschubachsen und der oder den Spindeln erreicht, da ein wiederholtes Beschleunigen und/oder Verzögern eines der Antriebe bis zum Erreichen der vorgegebenen Zielwerte nicht mehr benötigt wird, da die Antriebe bzw. deren Beschleunigungen derart aufeinander abgestimmt werden, dass mittels energieeffizienten Beschleunigungen jedes Antriebes die definierten Zielwerte der Elemente im Wesentlichen gleichzeitig erreicht werden können.

Die Anmelderin behält sich vor die in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Maschine
- 2a: erster Antrieb
- 2b: zweiter Antrieb
- 3a: erstes Element
- 3b: zweites Element
- 4: Steuereinrichtung
- 5: Werkzeugwechsler
- 6: Hydraulikaggregat mit ungeregeltem Motor
- 7: Nebenaggregat
- 8: Diagramm Spindeldrehzahl
- 9: zugehörige NC-Sätze der Steuerungseinrichtung
- 10: Diagramm Bahngeschwindigkeit
- 11: Diagramm Spindeldrehzahl über die Zeit
- 12: Diagramm Bahngeschwindigkeit über die Zeit
- 12a: Bahngeschwindigkeit über die Zeit t1
- 12b: Bahngeschwindigkeit über die Zeit t2
- 13: Diagramm Beschleunigungsverlauf Vorschubachse
- 13a: Beschleunigungsverlauf vor der Abstimmung der Antriebe
- 13b: Beschleunigungsverlauf nach der Abstimmung der Antriebe
- 14: Diagramm Bahngeschwindigkeit
- 15: Diagramm Spindeldrehzahl
- 16: Diagramm Spindeldrehzahl über die Zeit
- 16a: Spindeldrehzahl über die Zeit t1
- 16b: Spindeldrehzahl über die Zeit t2
- 17: Diagramm Bahngeschwindigkeit über die Zeit
- 18: Diagramm Beschleunigungsverlauf Vorschubachse

## Patentansprüche

1. Ein Verfahren zum Steuern einer Maschine (1), welche mindestens einen ersten Antrieb (2a) für ein erstes Element (3a) der Maschine (1) und mindestens einen zum ersten Antrieb (2a) unterschiedlichen zweiten Antrieb (2b) für ein zweites Element (3b) der Maschine (1) aufweist,
**dadurch gekennzeichnet, dass**
das erste Element (3a) auf einen vorgegebenen Zielwert beschleunigt wird, während das zweite Element (3b) auf einen vorgegebenen Zielwert beschleunigt wird, welcher insbesondere eine vorgegebene Drehzahl oder eine definierte Vorschubposition ist, wobei die Beschleunigung des ersten Elementes (3a) und die Beschleunigung des zweiten Elementes (3b) aufeinander abgestimmt werden.

2. Verfahren gemäß Anspruch 1,
**dadurch gekennzeichnet,dass**
eine Steuerungseinrichtung (4) der Maschine (1) eine Drehzahl des ersten Antriebes (2a) des ersten Elementes (3a) zumindest zeitweise beschleunigt oder eine Bewegung des zweiten Antriebes (2b) des zweiten Elementes (3b) zumindest zeitweise beschleunigt, damit das erste Element (3a) seine vorgegebene Drehzahl im Wesentlichen zur gleichen Zeit erreicht, zu der das zweite Element (3b) seinen vorgegebenen Zielwert erreicht.

3. Verfahren gemäß einem der Ansprüche 1 oder 2,
**dadurch gekennzeichnet, dass**
der Zielwert ein Wert ist, welcher aus einer Gruppe, welche zumindest die Position, die Geschwindigkeit, das Drehmoment, die Beschleunigung und/oder den Strom beinhaltet, ausgewählt wird.

4. Verfahren gemäß einem der Ansprüche 2 oder 3,
**dadurch gekennzeichnet, dass**
die Steuerungseinrichtung (4) einen Zeitbedarf bis zum Erreichen der vorgegebenen Drehzahl des ersten Elementes (3a) sowie den Zeitbedarf bis zum Erreichen des vorgegebenen Zielwertes des zweiten Elementes (3b) berechnet, um danach beide Zeitbedarfe zueinander abzugleichen und den größten Zeitbedarf zu ermitteln.

5. Verfahren gemäß einem der Ansprüche 2 bis 4,
**dadurch gekennzeichnet, dass**
die Steuerungseinrichtung (4) zumindest zeitweise eine von den Antrieben (2a, 2b) der Elemente (3a, 3b) verwendete Leistung abruft.

6. Verfahren gemäß einem der Ansprüche 2 bis 4,
**dadurch gekennzeichnet, dass**
die Steuerungseinrichtung (4) zumindest zeitweise eine von den Antrieben (2a, 2b) der Elemente (3a, 3b) verwendete Leistung indirekt über eine Mehrzahl von Steuer-und/oder Statussignalen von einzelnen in oder an der Maschine (1) angeordneten Nebenaggregaten (7) abruft.

7. Verfahren gemäß einem der vorangegangenen Ansprüche,
**dadurch gekennzeichnet, dass**
die Steuerungseinrichtung (4) die zur Steuerung der Maschine (1) zumindest zeitweise erforderlichen Nebenaggregate (7) erkennt und ansteuert.

8. Verfahren gemäß einem der vorangegangenen Ansprüche,
**dadurch gekennzeichnet, dass**
die Steuerungseinrichtung (4) Leistungsspitzen, insbesondere über mehrere Maschinen hinweg begrenzt.

9. Verfahren gemäß einem der vorangegangenen Ansprüche,
**dadurch gekennzeichnet, dass**
die Steuerungseinrichtung (4) eine Minimierung der Maschinenleistung zu jedem Zeitpunkt, insbesondere über mehrere Maschinen hinweg sicherstellt.

10. Verfahren gemäß einem der vorangegangenen Ansprüche,
**dadurch gekennzeichnet, dass**
die Steuerungseinrichtung (4) im Wesentlichen alle Informationen bezüglich einer maximal zulässigen Gesamtleistung der Maschine (1) erkennt, abspeichert und überwacht.

11. Verfahren gemäß Anspruch 10,
**dadurch gekennzeichnet, dass**
die Steuerungseinrichtung (4) die Beschleunigung der Drehzahl des ersten Elementes (3a) und/oder die Beschleunigung der Bewegung des zweiten Elementes (3b) zumindest zeitweise ändert, insbesondere reduziert, wenn die zulässige Gesamtleistung der Maschine (1) überschritten wird.

12. Eine Maschine (1), insbesondere zum Bearbeiten von Werkstücken, welche mindestens einen ersten Antrieb (2a) für ein erstes Element (3a) der Maschine (1) und mindestens einen zum ersten Antrieb (2a) unterschiedlichen zweiten Antrieb (2b) für ein zweites Element (3b) der Maschine (1) aufweist,
**dadurch gekennzeichnet, dass**
die Maschine (1) eine Steuerungseinrichtung (4) aufweist, welche die Antriebe (2a, 2b) der Elemente (3a, 3b) der Maschine (1) derart steuert, dass der erste Antrieb (2a) das erste Element (3a) auf eine vorgegebene Geschwindigkeit beschleunigt und der zweite Antrieb (2b) das zweite Element (3b) auf einen vorgegebene Zielwert beschleunigt, wobei die Beschleunigung des ersten Elementes (3a) und die Beschleunigung des zweiten Elementes (3b) aufeinander abgestimmt sind.

13. Maschine (1) gemäß Anspruch 12,
**dadurch gekennzeichnet, dass**
das erste Element (3a) eine Spindel und/oder das zweite Element (3b) eine Vorschubachse ist.
